# EUROPÄISCHE PATENTSCHRIFT

(11) **EP 2 833 092 B1**
(45) Veröffentlichungstag und Bekanntmachung des Hinweises auf die Patenterteilung: **07.09.2016**
(21) Anmeldenummer: 14179155.8
(22) Anmeldetag: 30.07.2014
(51) Int. Cl.: F01K 3/00, H05B 6/10, F24H 7/04, F28D 20/00

(54) **Verfahren sowie Vorrichtung zur Energiespeicherung**
Method and device for energy storage
Procédé et dispositif de stockage d'énergie

(30) Priorität: 01.08.2013 DE 102013108319
(43) Veröffentlichungstag der Anmeldung: 04.02.2015
(73) Patentinhaber: B + S Entwicklungsgesellschaft mbH, 51647 Gummersbach (DE)
(72) Erfinder: Schluckebier, Dieter, 52152 Simmeratz (DE)
(74) Vertreter: Naeven, Ralf

(56) Entgegenhaltungen:
- EP-A1- 2 557 372
- GB-A- 1 143 166

## Beschreibung

Die Erfindung betrifft ein Verfahren gemäß dem Oberbegriff des Anspruchs 1 sowie eine Vorrichtung gemäß dem Oberbegriff des Anspruchs 4.

Eine kurzfristige Anpassung der Energieerzeugung an einen schwankenden Energiebedarf ist je nach Art der Energieerzeugung nur mit einem oftmals wirtschaftlich fragwürdigen Aufwand oder gar nicht möglich. Deutlich wird dies insbesondere im Zusammenhang mit dem zunehmenden Einsatz regenerativer Energien, z. B. in Form von Solarenergie oder Windkraft. Das Problem der Anpassung wird in der Regel mit dem Einsatz von Energiespeichern angegangen. Allgemein bekannt sind z. B. Pumpspeicher, deren weiterer Ausbau oder Neuanlage wegen des großen Flächenverbrauchs oder der geringen Akzeptanz der durch einen solchen Ausbau betroffenen Bevölkerung problematisch ist. Alternativen zum Pumpspeicher, wie z. B. Druckluftspeicher oder die Herstellung und Speicherung von Wasserstoff als Energiespeicher, sind gemäß dem derzeitigen Stand der Technik aufwendig und/oder weisen einen unbefriedigenden Wirkungsgrad auf.

Mit der vorliegenden Erfindung wird ein thermoelektrischer Ansatz verfolgt, nämlich überschüssige elektrische Energie mittels Induktion in Wärmeenergie umzuwandeln und in einem Wärmespeicher zu speichern.

Aus der DE 10 2011 109 779 A1 sind ein Verfahren und eine Vorrichtung zur thermoelektrischen Energiespeicherung der eingangs genannten Art bekannt, wobei sich in einem wärmeisolierten Speichergehäuse ein Wärmespeichermedium befindet. Umgeben vom Wärmespeichermedium, welches gemäß dem Stand der Technik z. B. als Salzschmelze, in fester granularer Form oder in einer Mischung aus Feststoffen oder Flüssigkeiten vorliegen kann, ist ein Heizelement, z. B. aus ferromagnetischem Material, welches induktiv an das elektromagnetische Wechselfeld einer das Wärmespeichermedium umfassenden Induktionsspule ankoppelt und so als Ankoppelelement dient. Durch das Speichermedium hindurch ist zur Entnahme der Wärme ein Entnahmerohr geführt, durch das ein fluider Wärmeüberträger geleitet wird. Der fluide Wärmeüberträger wird lediglich zur Wärmeentnahme genutzt.

In der DE 10 2011 109 779 A1 ist außerdem offenbart, anstelle eines einzelnen Ankoppelelements eine Vielzahl im Wärmespeicher verteilter induktiv ankoppelnder Heizelemente zu verwenden. Bei einem einzelnen Heizelement ist der eingeschränkte unmittelbare Kontakt zum Wärmespeichermedium nachteilig. Sind zahlreiche Heizelemente gleichmäßig im Volumen verteilt, nehmen die nahe zur Induktionsspule positionierten Heizelemente den wesentlichen Teil der elektromagnetischen Energie auf, so dass die weiter innen gelegenen Heizelemente weniger oder gegebenenfalls gar nicht mehr erreicht werden. Die Verwendung allein von Feststoffen als Wärmespeichermedium wäre in diesem Fall nachteilig, da der Wärmeübergang von den Heizelementen zum festen Wärmespeichermedium lediglich über eine langwierige Wärmeleitung erfolgt.

Aus der US 3,596,034 A sind ebenfalls ein Verfahren und eine Vorrichtung zur thermoelektrischen Energiespeicherung bekannt, bei dem ein Heizelement induktiv erwärmt und die Wärme über Wärmeleitung an ein Wärmespeichermedium weitergegeben wird. Dabei ist es bekannt, ein Heizelement zu verwenden, welches sich aus einem das Wärmespeichermedium enthaltenden Gehäuse heraus erstreckt und außerhalb dieses Gehäuses in einem gesonderten, ebenfalls wärmeisolierten Raum, induktiv erhitzt wird. Durch Wärmeleitung entlang des Heizelements wird das Wärmespeichermedium erhitzt. Bei dem Wärmespeichermedium kann es sich um ein solches handeln, welches einen Übergang zwischen fest und flüssig durchläuft, z. B. Salze oder auch Metalle einschließlich Legierungen. Des Weiteren ist als Alternative zur induktiven Erwärmung eine Erwärmung mittels elektrischen Widerstands offenbart. Als weitere Alternative zur induktiven Erwärmung ist zudem offenbart, die Spule um einen das Wärmespeichermedium enthaltenden Mediumbehälter herum anzuordnen und damit im Gehäuse angeordnete magnetische Elemente mit induktiver Energie zu versorgen. Hierbei besteht der Nachteil, dass ein großer Mediumbehälter dementsprechend große Spulen benötigt. Zudem ist ein unbefriedigend langer Zeitraum für das Erreichen einer gleichmäßigen Erwärmung des Wärmespeichermediums über das gesamte Volumen hinweg zu erwarten. Da die Spule innerhalb des eine Wärmeisolation aufweisenden Gehäuses angeordnet ist, sind zudem erhebliche technische Probleme im Zusammenhang mit der Erwärmung der Induktionsspule zu erwarten oder aufwendige Kühlmaßnahmen erforderlich.

Aus der DE 2 117 103 A1 sind ein Verfahren und eine Vorrichtung zur thermoelektrischen Energiespeicherung bekannt, bei dem ein Metallblock als Wärmespeicher eingesetzt und unmittelbar induktiv erhitzt wird. Hier besteht ebenfalls das Problem, dass die elektromagnetische Energie der den Metallblock umgebenden Spule im Wesentlichen am Außenrand des Metallblocks abfällt und eine gleichmäßige Erhitzung des Wärmespeichers somit nicht erreicht wird.

Aus der DE 21 45 097 A1 sind ebenfalls ein Verfahren sowie eine Vorrichtung zur elektrothermischen Energiespeicherung bekannt, bei dem ein Metallblock als Speichermedium genutzt und induktiv erhitzt wird. Hier sind alternativ auch Kugeln aus Metall offenbart, deren Anhäufung im Speichergehäuse hinsichtlich der gleichmäßigen Erwärmung gegenüber dem Metallblock keinen Vorteil bringt. Vielmehr sind bei einer Anhäufung von Kugeln technische Probleme wegen der erfahrungsgemäß zu erwartenden Funkenbildung und Verbackungen im Bereich der Kontaktstellen der induktiv erhitzten Kugeln wahrscheinlich. Des Weiteren ist alternativ ein Speicherblock aus Magnesit offenbart, in den Metallteile zur Aufnahme der elektromagnetischen Energie eingelassen sind. Hier ist es ebenfalls zu erwarten, dass die äußeren, der Spule naheliegenden Metallteile einen wesentlichen Anteil der elektromagnetischen Energie bereits abfangen und somit eine Erwärmung des inneren Bereichs eher unzureichend ist. Die Metallteile geben die Wärme an das Magnesit mittels Wärmeleitung weiter. Auch hier ist es offenbart, die Spule innerhalb des nach außen isolierten Gehäuses anzuordnen, weshalb sich die bereits zur US 3,596,034 A angesprochenen Probleme in Bezug auf die Erwärmung der Spule ergeben dürften.

Aus der EP 2 557 372 A1 sind ein Verfahren gemäß dem Oberbegriff des Anspruchs 1 sowie eine Vorrichtung gemäß dem Oberbegriff des Anspruchs 4 bekannt. Mittels Induktion wird ein als Ankoppelelement dienendes elektrisch leitfähiges Heizelement aufgeheizt, welches von einem Wärmespeichermedium umgeben ist. Die Erwärmung des Wärmespeichermediums erfolgt über den Kontakt mit dem Heizelement und die sich daraus ergebende Wärmeleitung. Zur Wärmeentnahme aus dem Wärmespeichermedium wird ein fluider Wärmeüberträger durch ein Rohr geführt, welches das Wärmespeichermedium durchläuft.

Aus der GB 1,143,166 A ist eine Speichervorrichtung bekannt, bei der als Wärmespeichermedium Magnetit eingesetzt wird, wobei das Wärmespeichermedium durch heißes Gas oder elektrisch, z.B. mittels unmittelbar auf das Magnetit wirkender Induktion, erhitzt werden kann.

Es ist nun Aufgabe der vorliegenden Erfindung ein Verfahren sowie eine Vorrichtung der eingangs genannten Art zur Verfügung zu stellen, welche gegenüber dem Stand der Technik einen verbesserten Wirkungsgrad ermöglichen.

Bei einem Verfahren der eingangs genannten Art wird diese Aufgabe gelöst durch das kennzeichnende Merkmal des Anspruchs 1. Bei einer Vorrichtung der eingangs genannten Art wird die Aufgabe gelöst durch die kennzeichnenden Merkmale des Anspruchs 4. Vorteilhafte Ausbildungsformen des erfindungsgemäßen Verfahrens sowie der erfindungsgemäßen Vorrichtung ergeben sich aus den abhängigen Ansprüchen 2 oder 3 bzw. 5 bis 15.

Der Einsatz eines fluiden Wärmeüberträgers zur Wärmeeinspeisung erlaubt zum einen eine weitgehend gleichmäßige und schnelle Erwärmung des festen Wärmespeichermediums, da ein unmittelbarer Kontakt zu der gesamten oder zumindest zu einem großen Anteil der Oberfläche des Wärmespeichermediums erreicht werden kann. Der fluide Wärmeüberträger kann derart über das Gehäuse des Wärmespeichermediums verteilt werden, dass dieses gleichmäßig umströmt bzw. durchströmt wird.

Zum anderen kann mit einem bei unmittelbarem Kontakt zum Wärmespeichermedium das Wärmespeichermedium umströmenden oder durchströmenden Wärmeüberträger die Wärmeentnahme aus der Speichervorrichtung optimiert werden. Wenn zur Wärmeentnahme der kühle Wärmeüberträger in einem Eintrittsbereich auf das heiße, eine Entnahmetemperatur T_{E} aufweisende Wärmespeichermedium trifft, wird letzteres zunächst im Eintrittsbereich abgekühlt, während der Wärmeüberträger auf seinem Weg zu einem Ausgangsbereich auf T_{E} erwärmt wird. Bei weiterer Zufuhr des Wärmeüberträgers schreitet die Front des unter T_{E} abgekühlten Bereichs des Wärmespeichermediums in Richtung auf den Austrittsbereich vor. Im Austrittsbereich bleibt jedoch die ursprüngliche Temperatur T_{E} am längsten erhalten, da der Wärmeüberträger auf dem Weg dorthin bereits auf T_{E} erwärmt wurde. Somit steht am Austrittsbereich die Entnahmetemperatur T_{E} solange zur Verfügung, bis das gesamte Wärmespeichermedium eine Abkühlung erfahren hat, so dass das Wärmespeichermedium bis zu diesem Zeitpunkt den Wärmeüberträger auf T_{E} erwärmt. Hierfür ist es vorteilhaft, wenn zur Wärmeentnahme der fluide Wärmeüberträger zumindest über den überwiegenden Teil der in Hauptströmungsrichtung gegebenen Länge und zumindest über den überwiegenden Teil des senkrecht zur Längsrichtung gegebenen Querschnitts eines das Wärmespeichermedium aufweisenden Volumens geführt wird. Dadurch kann erreicht werden, dass der Wärmeüberträger das Wärmespeichermedium möglichst weitgehend über die gesamte Länge und möglichst gleichmäßig über möglichst den gesamten Querschnitt eines das Wärmespeichermedium aufweisenden Volumens umströmt und/oder durchströmt. Hierdurch kann ein erheblicher Effektivitätsgewinn gegenüber Lösungen gemäß dem Stand der Technik gegeben sein, bei denen der Wärmeüberträger durch eine Entnahmerohr durch das Wärmespeichermedium geführt wird, da dort die Abkühlung des Wärmespeichermediums um das Entnahmerohr herum beginnt. Ist dieser Bereich entlang der gesamten Länge des Entnahmerohres auf Werte unterhalb T_{E} abgekühlt, kann diese Temperatur vom folgenden Wärmeüberträger nicht mehr erreicht werden, obwohl mit Abstand vom Entnahmerohr Bereiche des Wärmespeichermediums diese Temperatur noch aufweisen können.

Für die Erwärmungsphase kann derselbe Wärmeüberträger oder gegebenenfalls auch ein anderer fluider Wärmeüberträger mittels des Ankoppelelements oder mindestens eines der Ankoppelelemente erwärmt werden.

Zur sprachlichen Vereinfachung der Darstellung soll Folgendes gelten: Wenn es heißt, dass das mindestens eine Ankoppelelement eine bestimmte Eigenschaft hat oder auf eine bestimmte Weise genutzt wird, soll dies neben der Bedeutung, dass jedes vorhandene Ankoppelelement diese Eigenschaft hat oder auf die genannte Weise genutzt wird, immer auch den Fall einschließen, dass bei mehr als einem Ankoppelelement nicht alle, aber mindestens eines der Ankoppelelemente diese Eigenschaft aufweist oder auf diese Weise genutzt wird.

Für die Erwärmung des Wärmeüberträgers, d.h. zur Wärmeeinspeisung, kann der Wärmeüberträger durch mindestens ein Fluidführungselement oder Fluidführungsrohr geführt werden, welches als Ankoppelelement dient. Das Fluidführungselement kann mit einer von einem Rohr abweichenden Geometrie ausgebildet sein. Der Wärmeüberträger kann zur Wärmeeinspeisung alternativ oder zusätzlich zum Durchströmen das mindestens eine Ankoppelelement umströmen.

Das mindestens eine Ankoppelelement kann zusammen mit dem Wärmespeichermedium in mindestens einem das Wärmespeichermedium enthaltenden Mediumbehälter angeordnet sein.

Der Transport des Wärmeüberträgers kann über Konvektion und/oder mittels mechanischer Pumpvorrichtungen bewirkt werden.

Das erfindungsgemäße Verfahren kann auch so ausgeführt werden, dass der Wärmeüberträger zumindest auch außerhalb eines Mediumbehälters, welcher zumindest einen Teil des Wärmespeichermediums enthält, induktiv mittels des mindestens einen Ankoppelelements erwärmt wird. Selbstverständlich können auch zwei oder mehr Mediumbehälter vorgesehen sein, wobei die Erwärmung des Wärmeüberträgers zumindest auch außerhalb jeden Mediumbehälters erfolgen kann.

Die Speichervorrichtung kann dabei so ausgebildet sein, dass das mindestens eine Ankoppelelement innerhalb eines wärmeisolierten Speichergehäuses angeordnet ist. In diesem Fall befindet sich zusätzlich zu dem mindestens einen Mediumbehälter auch das mindestens eine Ankoppelelement innerhalb des wärmeisolierten Speichergehäuses. Dabei kann es vorgesehen werden, das mindestens eine Ankoppelelement innerhalb eines gegenüber dem Mediumbehälter wärmeisolierten Heizbereichs, der z.B. kanalförmig ausgeführt sein kann, anzuordnen. Dieser Heizbereich kann zusätzlich auch zur Umgebung wärmeisoliert werden. Ein solcher Heizbereich kann z. B. den Mediumbehälter zumindest auf einem Teil des Umfanges umgeben.

Das mindestens eine Ankoppelelement kann unterschiedliche Formen aufweisen.

Handelt es sich bei dem mindestens einen Ankoppelelement um ein vom Wärmeüberträger umströmtes Teil, kann dieses vorteilhaft ringförmig ausgebildet sein. Die einzelnen Ankoppelelemente können in vorteilhafter Weise räumlich voneinander getrennt angeordnet sein, z. B. indem sie in einem anderen Material, z. B. Schotter, eingelegt werden.

Das erfindungsgemäße Verfahren kann auch so ausgeführt werden, dass der Wärmeüberträger außerhalb eines wärmeisolierten Speichergehäuses mittels des mindestens einen Ankoppelelements induktiv erwärmt wird. Hierfür ist das Ankoppelelement außerhalb eines zumindest eines Teils des Wärmespeichermediums enthaltenden Mediumbehälters angeordnet. Das mindestens eine Ankoppelelement ist dabei bevorzugt rohrförmig ausgeführt.

In einer weiter bevorzugten Ausführungsform kann die induktive Einkoppelung von Energie in besonderer Weise effektiv mittels einer transformatorartigen Schaltung erfolgen, wobei das mindestens eine als Fluidführungselement ausgeführte Ankoppelelement als Sekundärwicklung in mindestens einer Wicklung um den magnetischen Kern der transformatorartigen Schaltung gewickelt ist. Vorzugsweise ist die Wicklung bifilar, d.h., dass das Fluidführungselement in zwei Fluidführungsteilelemente aufgeteilt wird, von denen jedes einen Anteil des Wärmeüberträgers führt. Die beiden Fluidführungsteilelemente, die vorzugsweise rohrförmig sind, werden z.B. auf gegenüberliegenden Seiten um den magnetischen Kern der transformatorartigen Schaltung herumgeführt und hinter dem magnetischen Kern wieder zu einem einzelnen Fluidführungselement zusammengeführt, so dass die beiden Fluidführungsteilelemente gemeinsam eine Wicklung darstellen. Selbstverständlich können mehrere Wicklungen vorgesehen werden oder auch zwei oder mehr Fluidführungselemente in der dargestellten Weise in Fluidführungsteilelemente aufgeteilt werden.

Die erfindungsgemäße Vorrichtung kann auch so ausgebildet werden, dass das Ankoppelelement oder mindestens eines der Ankoppelelemente derart gestaltet ist, dass der Leistungsfaktor Kosinus ϕ (= ohmscher Widerstand/Impedanz) größer oder gleich 0,5 ist. Zum Erreichen eines hohen Wirkungsgrades ist es vorteilhaft, den Leistungsfaktor Kosinus ϕ, welcher dem Verhältnis von ohmschem Widerstand zur Impedanz entspricht, möglichst groß zu gestalten. Dies kann dadurch erreicht werden, dass die Weglänge des im mindestens einen Ankoppelelement induzierten Stromes möglichst lang ist, um den ohmschen Widerstand zu erhöhen. Hierfür können zum Beispiel die oben erwähnten Fluidführungsteilelemente jeweils möglichst lang gestaltet werden, zum Beispiel mit einer Länge von mindestens 30 %, vorzugsweise mindestens 50 %, weiter vorzugsweise mindesten 75 % der Länge des zugehörigen Speichergehäuses. Die Länge eines aufrecht stehenden Speichergehäuses entspricht seiner Höhe. Alternativ können Ankoppelelemente derart miteinander elektrisch verbunden werden, dass vielfache Verzweigungen im Stromweg erzeugt werden.

Die erfindungsgemäße Vorrichtung kann auch so ausgebildet sein, dass mindestens zwei Speichermodule mit jeweils mindestens einem Mediumbehälter vorgesehen sind, die sich parallel betreiben lassen, wobei unterschiedliche Anordnungen der Speichermodule vorgesehen werden können, z. B. in einer dichten Packung oder nebeneinander aufrecht stehend oder liegend. Es kann vorgesehen sein, dass mindestens zwei Mediumbehälter an unterschiedliche Kreisläufe für den Wärmeüberträger angeschlossen sind. Dabei können die Speichermodule an unterschiedliche Kreisläufe für den Wärmeüberträger angeschlossen sein, wodurch die einzelnen Speichermodule unabhängig voneinander betrieben werden können. Auf diese Weise ist es möglich, einzelne Speichermodule aufzuladen, d. h. zu erwärmen, während aus mindestens einem weiteren Speichermodul Wärme entnommen wird. Die Speichermodule können jeweils für sich wärmeisoliert sein oder eine gemeinsame umfassende Wärmeisolierung aufweisen.

Des Weiteren kann es vorteilhaft sein, die Vorrichtung zur Energiespeicherung so auszubilden, dass mindestens zwei getrennt voneinander steuerbare Heizzonen vorgesehen werden. Somit ist es möglich, die Vorrichtung mit mindestens zwei getrennt voneinander steuerbaren Heizzonen zu betreiben. Auf diese Weise kann dem Wärmespeichermedium ein gewünschtes Profil aufgegeben werden, was insbesondere dann vorteilhaft sein kann, wenn ein und dieselbe Vorrichtung gleichzeitig beladen und entladen wird.

Die erfindungsgemäße Vorrichtung kann auch so ausgebildet sein, dass mindestens ein Kreislauf des fluiden Wärmeüberträgers zusätzlich zu mindestens einer Wärmeabgabeeinheit mindestens eine die Wärmeabgabeeinheit überbrückende Bypassleitung aufweist. Somit kann der Wärmeüberträger zum Beladen und zum Entladen über denselben Kreislauf geführt werden. Für den Beladevorgang wird die Bypassleitung genutzt, für das Entladen der Weg über die Wärmeabgabeeinheit.

Das Wärmespeichermedium ist bevorzugt zumindest zum Teil ein mineralisches Material, z.B. Kieselstein, Dolomit, Granit, Korund, ein sonstiges Gestein oder eine Mischung von mindestens zwei mineralischen Materialien. Als Wärmespeichermedium kann auch ein metallisches Material, wie z.B. Eisen, insbesondere in Form von Eisenkugeln, verwendet werden, solange das metallische Material in einem Volumen angeordnet ist, in dem keine induktive Ankopplung vorgesehen ist. Metallische Teile als Wärmespeichermedium sollten bevorzugt eine Ausdehnung (z.B. Durchmesser) von 50 mm nicht überschreiten, da mit zunehmender Ausdehnung das Verhältnis von Oberfläche zum Volumen kleiner und damit ungünstiger für die Wärmeentnahme wird. Bevorzugt sind Ausdehnungen (z.B. für den Durchmesser) von 20 mm bis 30 mm. Metallisches Material als Wärmespeichermedium kann auch mit einem oder mehreren mineralischen Materialien, wie sie oben beispielhaft genannt sind, gemischt werden.

Vorteilhafte Ausführungsformen des erfindungsgemäßen Verfahrens sowie der erfindungsgemäßen Vorrichtung werden im Folgenden anhand von Figuren vorgestellt.

Es zeigt schematisch
- Fig. 1:: eine Prinzipskizze einer Speichervorrichtung im Einsatz,
- Fig. 2:: eine zweite Variante der Speichervorrichtung,
- Fig. 3: eine dritte Variante der Speichervorrichtung,
- Fig. 4:: die Variante gemäß Fig. 3 in einem Querschnitt,
- Fig. 5:: die Variante gemäß Fig. 3 in einem vergrößerten Ausschnitt im Querschnitt,
- Fig. 6: die Variante gemäß Fig. 3 in einem vergrößerten Ausschnitt in perspektivischer Ansicht,
- Fig. 7:: eine Speichervorrichtung im modularen Aufbau in einer liegenden Variante,
- Fig. 8:: eine Speichervorrichtung im modularen Aufbau in einer stehenden Variante im Querschnitt,
- Fig. 9:: die Variante gemäß Fig. 8 in anderer Ansicht,
- Fig. 10: eine vierte Variante einer Speichervorrichtung,
- Fig. 11:: eine fünfte Variante einer Speichervorrichtung,
- Fig. 12:: eine sechste Variante einer Speichervorrichtung und
- Fig. 13:: die Variante gemäß Fig. 12 im Querschnitt.

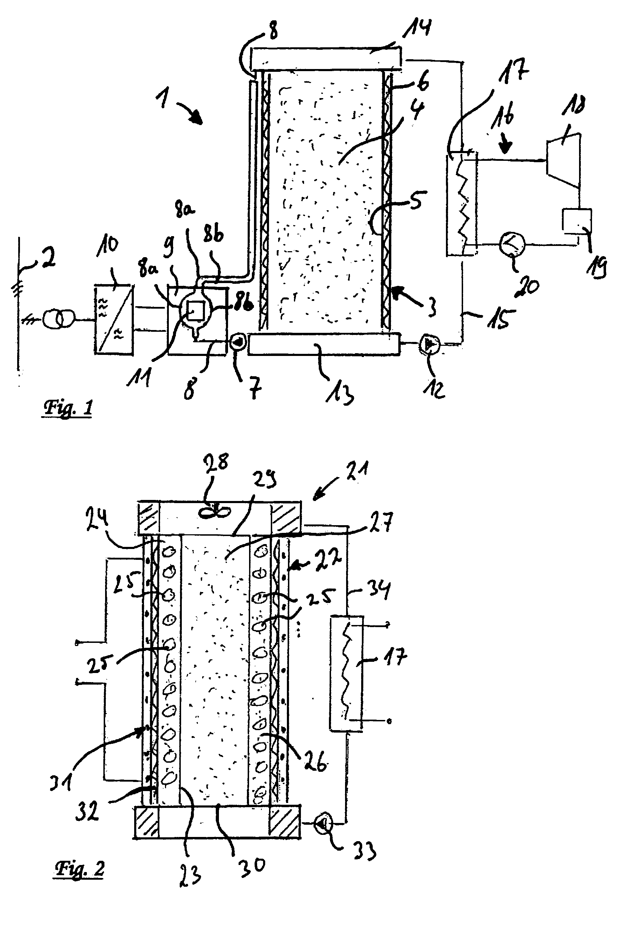

Fig. 1 zeigt in schematisierter Darstellung eine Speichervorrichtung 1, welche am Stromnetz 2 einer Energie gewinnenden Einrichtung, z. B. einem Windpark, angeschlossen ist. Die Speichervorrichtung umfasst ein Speichergehäuse 3 mit einer Füllung aus einem Wärmespeichermedium 4 innerhalb eines Mediumbehälters 5, welches zur Außenseite des Speichergehäuses 3 mit einer Wärmeisolation 6 versehen ist. Beim Wärmespeichermedium 4 handelt es sich bevorzugt um ein mineralisches Material, z. B. eine Ansammlung von Steinen. Das Wärmespeichermedium 4 ist porös für einen fluiden Wärmeüberträger, z. B. Luft, einem Gas oder sonstigem Gasgemisch oder einer geeigneten Flüssigkeit.

Zum Beladen der Speichervorrichtung 1 wird der fluide Wärmeüberträger erhitzt und anschließend in den Mediumbehälter 5 eingeleitet. Der Wärmeüberträger durchläuft dabei einen Kreislauf derart, dass er die gesamte Länge des Mediumbehälters 5 durchläuft. In der Variante gemäß Fig. 1 wird der Wärmeüberträger mittels eines ersten Ventilators 7 im Kreislauf geführt.

Für die Erwärmung durchströmt der Wärmeüberträger ein Fluidführungsrohr 8, welches aus einem induktiv ankoppelnden Material besteht. Das Fluidführungsrohr 8 dient somit als Ankoppelelement und wird in einem Energiewandler 9 induktiv erwärmt. Der Energiewandler 9 wird mittels eines Wechselrichters 10 vom Stromnetz 2 mit Energie versorgt. Der Energiewandler 9 ist z. B. eine Transformatorschaltung, wobei das Fluidführungsrohr 8 in zwei den Wärmeüberträger leitende Fluidführungsteilrohre 8a und 8b aufgeteilt wird, die an gegenüberliegenden Seiten an dem magnetischen Kern 11 entlang geführt und unmittelbar vor Eintritt in das Speichergehäuse wieder zu dem Fluidführungsrohr 8 vereint werden. Die Fluidführungsteilrohre 8a und 8b wirken somit als Sekundärspule. Auf diese Weise ist eine effektive induktive Kopplung zwischen den Fluidführungsteilrohren 8a und 8b und einer hier nicht dargestellten Primärwicklung gegeben, die zur Erwärmung der Fluidführungsteilrohre 8a und 8b und damit des darin enthaltenen fluiden Wärmeüberträgers führt. Das Fluidführungsrohr 8 ist außerhalb der Aufteilung in die Fluidführungsteilrohre 8a und 8b stromlos. Die beschriebene bifilare Aufteilung des Fluidführungsrohrs 8 vom Energiewandler 9 bis kurz vor dem Eintritt in das Speichergehäuse 3 ist bewusst langgestreckt, was den Vorteil mit sich bringt, dass bei gleichzeitig geringem induktiven Widerstand der Weg des induzierten Stromes lang und damit der ohmsche Widerstand R hoch ist. Auf diese Weise wird ein höherer Leistungsfaktor Kosinus ϕ = R/Z (Z ist die Impedanz) von z.B. mindestens 0,6 erreicht, womit ein entsprechend hoher Wirkungsgrad von bis zu 99% einhergehen kann.

Ist die Speichervorrichtung 1 geladen, so dass das Wärmespeichermedium 4 eine Temperatur von z. B. bei Luft als Wärmeüberträger 700° C aufweist, kann bei Bedarf Wärme entnommen werden, die vorzugsweise zur Stromerzeugung genutzt werden kann. Die Wärmeentnahme erfolgt über einen zweiten Ventilator 12, der den Wärmeüberträger, der zuvor die Speichervorrichtung 1 beladen hat, über einen hier nicht im Detail dargestellten Sammelausgang aus dem Speichergehäuse 3 zieht. Dieser Sammelausgang 13 zieht den Wärmeüberträger über den gesamten Querschnitt des Mediumbehälters 5, so dass keine gesonderte Wärmeentnahmeleitung durch den Mediumbehälter 5 geführt werden muss. In entsprechender Weise wird der Wärmeüberträger vor dem Erwärmen über einen Sammeleingang 14 über den gesamten Querschnitt des Mediumbehälters 5 in den Mediumbehälter 5 eingeführt. Sammelausgang 13 und Sammeleingang 14 werden beim Beladen und Entladen der Speichervorrichtung 1 in gleicher Weise genutzt.

Der erhitzte Wärmeüberträger wird von dem zweiten Ventilator 12 über ein Entnahmerohr 15 einer eine Flüssigkeit im Kreislauf führenden Wärme-Kraft-Kopplung 16 zugeleitet, der einen Wärmetauscher 17 zu Erzeugung von Dampf aus der Flüssigkeit, eine mit dem Dampf angetriebene Turbine 18 sowie einen Kondensator 19 zur Verflüssigung des Dampfes umfasst. Bei dieser Flüssigkeit kann es sich z. B. um Wasser handeln. Die Flüssigkeit wird mittels einer Pumpe 20 im Kreislauf der Wärme-Kraft-Kopplung 16 angetrieben. Die Turbine 18 ist an einem hier nicht dargestellten Generator zur Stromerzeugung angeschlossen.

In den im Folgenden dargestellten weiteren Varianten von Speichervorrichtungen sind Stromnetz 2 und Wechselrichter 10 jeweils nicht dargestellt und von der Wärme-Kraft-Kopplung 16 jeweils lediglich der Wärmetauscher 17.

In einer zweiten Speichervorrichtungsvariante 21 (Fig. 2) wird der fluide Wärmeüberträger innerhalb des Speichergehäuses 22 erhitzt. Hierfür ist ein Mediumbehälter 23 an seinem äußeren Umfang von einem Heizbereich 24 umgeben, der ringförmig den gesamten Umfang des Mediumbehälters 34 umgeben oder auch aus mindestens zwei voneinander getrennten, auf dem Umfang des Mediumbehälters 5 verteilten axial verlaufender Kanälen bestehen kann. Im Heizbereich 24 ist eine Vielzahl von vorzugsweise ringförmigen Ankoppelelementen 25 mit Abstand zueinander angeordnet. Die Ankoppelelemente 25 sind in einem Einbettmaterial 26 eingebettet und somit in ihrer Position stabil. Das Einbettmaterial 26 kann mit dem im Mediumbehälter 23 enthaltenen Wärmespeichermedium 27 identisch sein.

Für den Beladeprozess wird der Wärmeüberträger mittels eines Ventilators 28 im Umlauf gehalten, so dass der Wärmeüberträger über einen Sammeleingang 29 durch den Mediumbehälter 23 hindurch und über den Sammelausgang 30 dem Heizbereich 24 zugeführt wird. Im Heizbereich 24 umströmt der Wärmeüberträger die Ankoppelelemente 25, welche induktiv mittels einer Induktionsspule 31 erhitzt werden, die sich koaxial um das Speichergehäuse 22 erstreckt und von der in Fig. 2 einzelne Windungen zu sehen sind. Zwischen der Induktionsspule 31 und dem Heizbereich 24 ist eine Wärmeisolation 32 gegeben.

Zur Entnahme von Energie aus der Speichervorrichtung 21, d. h. für den Entladeprozess, wird mittels eines Entnahmeventilators 33 der Wärmeüberträger über ein Entnahmerohr 34 dem Wärmetauscher 17 zugeführt, womit die Strömungsrichtung des Wärmeüberträgers innerhalb des Speichergehäuses 22 gegenüber der Variante in Fig. 1 während des Entladeprozesses umgekehrt ist. Der in das Entnahmerohr 34 eintretende Wärmeüberträger kommt vorzugsweise sowohl aus dem Mediumbehälter 23 als auch aus dem Heizbereich 24, um auch die dort gespeicherte Wärme entnehmen zu können. Der im Wärmetauscher 17 abgekühlte Wärmeüberträger wird dem Speichergehäuse 22 wieder zugeführt, um den Kreislauf des Wärmeüberträgers zu schließen.

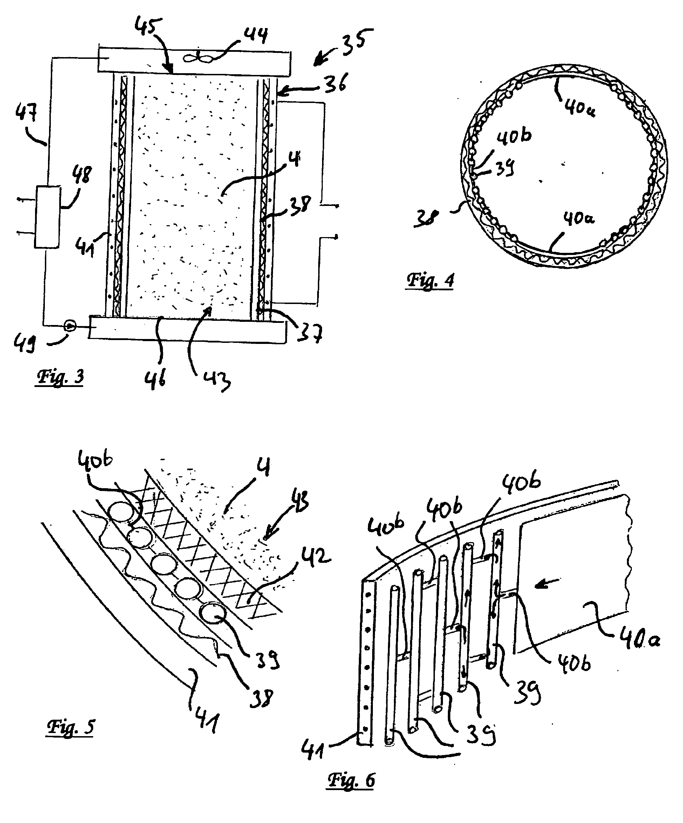

Die Figuren 3 bis 6 stellen eine dritte Speichervorrichtungsvariante 35 vor, Fig. 3 in einer Gesamtansicht im Längsschnitt, Fig. 4 lediglich einige Elemente in einem hierzu senkrechten Querschnitt und Fig. 5 und 6 jeweils vergrößerte Ausschnitte. Ähnlich zu der Variante nach Fig. 2 wird der Wärmeüberträger innerhalb des Speichergehäuses 36 in einem Heizbereich 37 erwärmt, der von einer Isolation 38 umgeben ist. Der Heizbereich 37 umgibt ringförmig einen Mediumbehälter 42. Im Heizbereich 37 sind (allein in den Figuren 4 bis 6 dargestellt) erste Ankoppelelemente 40a, zweite Ankoppelelemente 40b und Stabelemente 39 angeordnet. Die ersten Ankoppelelemente 40a sind im Querschnitt kreisbogenförmige, d. h. zum Verlauf einer Induktionsspule 41 parallel ausgerichtete Platten, während die Stabelemente 39 axial verlaufen. Die zweiten Ankoppelelemente 40b sind in Umfangsrichtung ausgerichtet und verbinden zum einen die ersten Ankoppelelemente 40a elektrisch leitend mit benachbarten Stabelementen 39 und kontaktieren zum anderen zueinander benachbarte Stabelemente 39 miteinander.

Die ersten und zweiten Ankoppelelemente 40a und 40b werden mittels der Induktionsspule 41, die den Heizbereich 37 umgibt, auf induktivem Wege erhitzt. Der induzierte Strom läuft - wie durch einige Pfeile angedeutet - über die ersten und zweiten Ankoppelelemente 40a und 40b sowie die Stabelemente 39. Die gegebene Anordnung sorgt dafür, dass für die induzierten Ströme ein langer Weg und damit ein hoher Ohmscher Widerstand bei gleichzeitig geringem induktivem Widerstand gegeben ist. Hierdurch wird der Wirkfaktor Kosinus ϕ = R/Z groß, womit ein entsprechend hoher Wirkungsgrad einhergeht. Aufgrund der Ausrichtung der Stabelemente 39 relativ zur Induktionsspule 41 wird in den Stabelementen allenfalls ein geringer, in Umfangsrichtung der Stabelemente verlaufender Strom induziert.

Fig. 4 zeigt lediglich die Isolation 38, die Stabelemente 39 sowie die ersten und zweiten Ankoppelelemente 40a und 40b. Fig. 5 ist demgegenüber ein vergrößerter Ausschnitt mit der außen liegenden Induktionsspule 41, der Isolation 38, den Stabelementen 39, den zweiten Ankoppelelementen 40b sowie der vorzugsweise aus Beton bestehenden Wand 42 des Mediumbehälters 43, welcher das Wärmespeichermedium 4 enthält. In Fig. 6 ist die zwischen der Induktionsspule 41 einerseits und den Ankoppelelementen 40a und 40b sowie den Stabelementen 39 andererseits angeordnete Isolation 38 (Fig. 3 bis 5) der besseren Übersichtlichkeit halber nicht dargestellt.

Bei den Stabelementen 39 kann es sich um Hohlstäbe handeln, die als Fluidführungsrohre fungieren, in denen der Wärmeüberträger geführt wird. Alternativ oder gleichzeitig hierzu können die Stabelemente 39 wie auch die ersten und zweiten Ankoppelelemente 40a und 40b vom Wärmeüberträger umströmt werden. Wird der Wärmeüberträger nicht über die Stabelemente geführt, kann es sich auch um Vollstäbe handeln. Wird der Wärmeüberträger allein durch die Stabelemente 39 hindurch geführt, kann die Wand 42 entfallen. Der Mediumbehälter 43 würde dann von der Isolation 38 oder von einer hier nicht dargestellten, zwischen Isolation 38 einerseits und den Ankoppelelementen 40a und 40b sowie den Stabelementen 39 andererseits angeordneten Wand begrenzt.

Für den Beladevorgang und Entladevorgang sind Sammeleingänge bzw. Sammelausgänge über den gesamten Querschnitt des Mediumbehälters 43 gegeben, wobei für den Beladevorgang oben der unterhalb eines Belade-Ventilators 44 befindliche Sammeleingang 45 und unten der Sammelausgang 46 ist. Für den Entladevorgang wird der Sammeleingang 45 als Sammelausgang genutzt. Für das Entladen sind ein Entnahmerohr 47, ein Wärmetauscher 48 und ein Entnahme-Ventilator 49 vorgesehen.

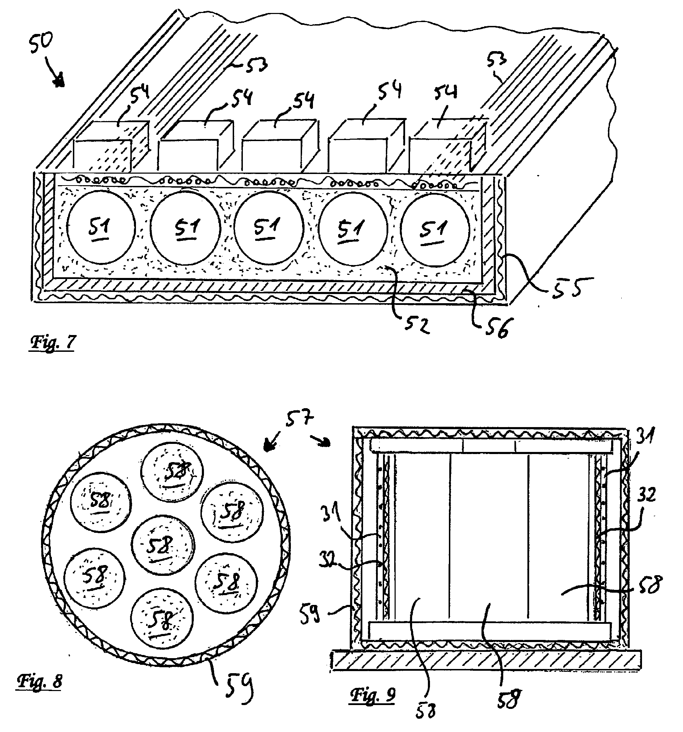

Fig. 7 zeigt eine Sammelspeichervorrichtung 50 mit insgesamt fünf Mediumbehälter 51, die im Betrieb für eine horizontale Lagerung vorgesehen sind und sich in der Sammelspeichervorrichtung 50 parallel zueinander erstrecken. Fig. 7 zeigt eine quer aufgeschnittene Variante und somit nicht das vordere, dem Betrachter zugewandte Ende der Sammelspeichervorrichtung 50. Dem entsprechend sind weder Sammeleingänge oder Sammelausgänge der einzelnen Mediumbehälter 51 zu sehen, die gleichwohl an den vorderen bzw. hinteren Enden vorhanden sind.

Die Mediumbehälter 51 sind innerhalb der Sammelspeichervorrichtung 50 stabil in Schotter 52 gelagert. Jeder Mediumbehälter 51 ist zudem von einer Wärmeisolierung, die hier nicht separat gezeigt ist, umgeben. Die Beladung erfolgt über jeweils eine Mehrzahl von Fluidführungsrohren 53, die im Bereich von Induktoren 54 als Ankoppelelemente dienen und dort induktiv erhitzt werden. Die Fluidführungsrohre können - wie zur Variante gemäß Fig. 1 dargestellt - bifilar ausgeführt, d.h. in jeweils zwei Fluidführungsteilrohre aufgeteilt sein, welche einen von in Fig. 7 nicht dargestellten magnetischen Kernen beidseitig passieren. Der Beladezyklus wird auch hier mittels nicht dargestellter Ventilatoren aufrechterhalten. Ein Entladezyklus ist nicht dargestellt, kann jedoch analog zu den Entladevorgängen bei den zuvor dargestellten Varianten durchgeführt werden.

Zu den mittleren drei Induktoren 54 sind die tatsächlich ebenfalls vorgesehenen Fluidführungsrohre 53 der Übersichtlichkeit halber nicht dargestellt.

Die Sammelspeichervorrichtung 50 gemäß Fig. 7 eignet sich in besonderer Weise zur Lagerung im Erdreich. Hierfür ist eine Wanne 56, z. B. aus Beton, vorgesehen, welche außen von einer zusätzlichen Isolierung 55 umgeben ist.

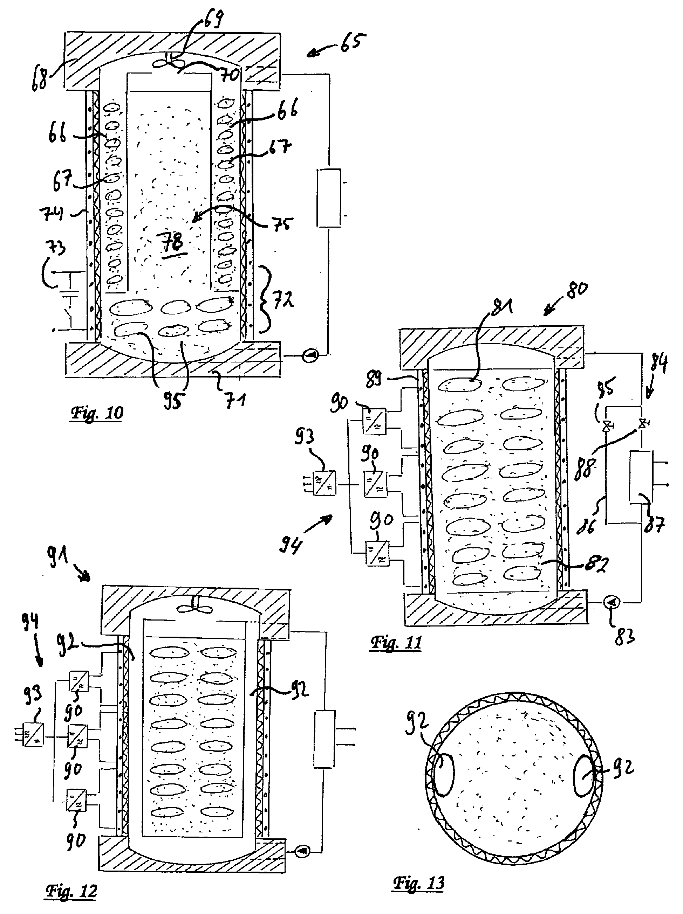

Die Figuren 8 und 9 zeigen eine zweite Variante einer Sammelspeichervorrichtung 57 im Querschnitt (Fig. 8) und im Längsschnitt (Fig. 9). Hier sind sieben Speichermodule 58 innerhalb einer Doppelwandung mit Isolierung 59 angeordnet. Die Speichermodule 58 können insbesondere in Bezug auf Gehäuse, Mediumbehälter und/oder Heizkanal (sofern vorhanden) so aufgebaut sein wie die in Fig. 1 bis 6 oder weiter unten zu den Figuren 10 bis 13 dargestellten Varianten. In Fig. 9 sind beispielhaft zu den äußeren Modulen 58 jeweils eine Induktionsspule 31, ein Heizbereich 24 (wie in Fig. 2) und eine Isolierung 32 wiedergegeben. Zum vorderen Speichermodul 58 sind diese Elemente in der Darstellung weggelassen.

Die Speichermodule 58 sind jeweils für sich in hier nicht dargestellter Weise gegenüber der Umgebung wärmeisoliert und stehen aufrecht. Der Zwischenraum zwischen den Speichermodulen 58 erlaubt den Zugang, z.B. zu Wartungszwecken. Die Beladung und/oder Entladung der Speichermodule 58 kann jeweils mit einer der zu den anderen Varianten beschriebenen Methoden erfolgen, wobei die Wärmeüberträgerkreisläufe der einzelnen Speichermodule 58 getrennt oder miteinander gekoppelt sein können.

Fig. 10 zeigt eine weitere Variante einer Speichervorrichtung 65, die der Speichervorrichtung 21 nach Fig. 2 ähnlich ist. Es ist ein Heizbereich 66 mit Ankoppelelementen 67 vorgesehen, durch den ein hier durchfließender Wärmeüberträger mittels der induktiv erhitzten Ankoppelelemente 67 erwärmt wird. Am Kopfende 68 ist der Beladeventilator 69 oberhalb des Sammeleingangs 70 für den Beladevorgang vorgesehen. Oberhalb des Fußendes 71 ist ein Heizendbereich 72 gegeben, in dem innerhalb des Mediumbehälters 78 weitere Ankoppelelemente 95 vorgesehen sind. Zudem ist im Heizendbereich 72 eine schaltbare Kapazität 73 parallel zur Induktionsspule 74 angeschlossen. Hierdurch ist es möglich, im Heizendbereich 72 dem Speichermedium 75 durch einfaches Zuschalten der Kapazität 73 eine erhöhte Leistungsdichte zuzuführen, die sowohl beim Beladevorgang als auch beim Entladevorgang sinnvoll sein kann.

Fig. 11 zeigt eine weitere Speichervorrichtung 80, bei der Ankoppelelemente 81 im Mediumbehälter 82 angeordnet sind. Ein gesonderter Heizbereich ist hier nicht vorgesehen. Zum Beladen und Entladen der Speichervorrichtung 80 wird derselbe Kreislauf mit einem Ventilator 83 verwendet, wobei der Kreislauf eine Bypassschaltung 84 aufweist. Für den Beladevorgang wird ein Beladeventil 85 geöffnet, wodurch der Wärmeüberträger über den Bypass 86 an einem Wärmetauscher 87 vorbeigeführt wird. Für den Entladevorgang wird das Beladeventil 85 geschlossen und ein Entladeventil 88 geöffnet.

Die Speichervorrichtung weist eine Induktionsspule 89 mit drei Heizzonen auf, die jeweils an einen Umrichter 94 angeschlossen, der einen Drehstromeingang 93 und drei Wechselstromausgänge 90 aufweist. Auf diese Weise lassen sich unterschiedliche Heizprofile und damit auch unterschiedliche Wärmeprofile innerhalb des Mediumbehälters 82 einstellen, wodurch die Variabilität erhöht wird.

Die Fig. 12 zeigt im Längsschnitt und Fig. 13 im Querschnitt eine weitere Variante einer Speichervorrichtung 91, die analog zur Fig. 11 drei Heizzonen aufweist. Diesbezüglich wird auf die Fig. 11 verwiesen. Anders als in Fig. 11 sind in Fig. 12 und Fig. 13 zwei Kanäle 92 vorgesehen, die eine Zirkulation des Wärmeüberträgers während des Beladungsvorgangs ermöglichen. Hierdurch kann auf einen Bypass (86 in Fig. 11) verzichtet werden.

**Bezugszeichenliste**

| | | | |
|---|---|---|---|
| 1 | Speichervorrichtung | 32 | Wärmeisolation |
| 2 | Stromnetz | 33 | Entnahmeventilator |
| 3 | Speichergehäuse | 34 | Entnahmerohr |
| 4 | Wärmespeichermedium | 35 | Speichervorrichtung |
| 5 | Mediumbehälter | 36 | Speichergehäuse |
| 6 | Wärmeisolation | 37 | Heizbereich |
| 7 | erster Ventilator | 38 | Isolation |
| 8 | Fluidführungsrohr | 39 | Stabelement |
| 9 | Energiewandler | 40 | Ankoppelelement |
| 10 | Wechselrichter | 41 | Induktionsspule |
| 11 | magnetischer Kreis | 42 | Wand |
| 12 | zweiter Ventilator | 43 | Mediumbehälter |
| 13 | Sammelausgang | 44 | Ventilator |
| 14 | Sammeleingang | 45 | Sammeleingang |
| 15 | Entnahmerohr | 46 | Sammelausgang |
| 16 | Wärme-Kraft-Kopplung | 47 | Entnahmerohr |
| 17 | Wärmetauscher | 48 | Wärmetauscher |
| 18 | Turbine | 49 | Entnahmeventilator |
| 19 | Kondensator | 50 | Sammelspeichervorrichtung |
| 20 | Pumpe | 51 | Mediumbehälter |
| 21 | Speichervorrichtung | 52 | Schotter |
| 22 | Speichergehäuse | 53 | Fluidführungsrohr |
| 23 | Mediumbehälter | 54 | Induktor |
| 24 | Heizbereich | 55 | Isolierung |
| 25 | Ankoppelelement | 56 | Wanne |
| 26 | Einbettmaterial | 57 | Sammelspeichervorrichtung |
| 27 | Wärmespeichermedium | 58 | Speichermodul |
| 28 | Ventilator | 59 | Wandung |
| 29 | Sammeleingang | 65 | Speichervorrichtung |
| 30 | Sammelausgang | 66 | Heizbereich |
| 31 | Induktionsspule | 67 | Ankoppelelement |
| 68 | Kopfende | | |
| 69 | Beladeventilator | | |
| 70 | Sammeleingang | | |
| 71 | Fußende | | |
| 72 | Heizendbereich | | |
| 73 | Kapazität | | |
| 74 | Induktionsspule | | |
| 75 | Speichermedium | | |
| 78 | Mediumbehälter | | |
| 80 | Speichervorrichtung | | |
| 81 | Ankoppelelement | | |
| 82 | Mediumbehälter | | |
| 83 | Ventilator | | |
| 84 | Bypass-Schaltung | | |
| 85 | Beladeventil | | |
| 86 | Bypass | | |
| 87 | Wärmetauscher | | |
| 88 | Entladeventil | | |
| 89 | Induktionsspule | | |
| 90 | Wechselstromausgang | | |
| 91 | Speichervorrichtung | | |
| 92 | Kanäle | | |
| 93 | Drehstromeingang | | |
| 94 | Umrichter | | |
| 95 | Ankoppelelement | | |

## Patentansprüche

1. Verfahren zur Energiespeicherung, bei dem
mindestens ein Ankoppelelement (8a, 8b, 25, 39, 40, 53, 67, 81) mittels elektromagnetischer Induktion erhitzt und Wärme vom mindestens einen Ankoppelelement (8a, 8b, 25, 39, 40, 53, 67, 81) auf ein Wärmespeichermedium (4, 27, 75) aus Feststoff übertragen wird und
ein fluider Wärmeüberträger verwendet wird,
**dadurch gekennzeichnet, dass**
a) zur Wärmeeinspeisung in das Wärmespeichermedium (4, 27, 75) der fluide Wärmeüberträger vom Ankoppelelement (8a, 8b, 25, 39, 40, 53, 67, 81) erwärmt wird und das Wärmespeichermedium (4, 27, 75) umströmt und/oder durchströmt und/oder
b) zur Wärmeentnahme der fluide Wärmeüberträger das Wärmespeichermedium (4, 27, 75) unmittelbar kontaktierend dieses umströmt und/oder durchströmt.

2. Verfahren nach Anspruch 1, **dadurch gekennzeichnet, dass** der Wärmeüberträger zumindest auch außerhalb mindestens eines zumindest einen Teil des Wärmespeichermediums (4, 27, 75) enthaltenden Mediumbehälters (5, 23, 43, 51, 78, 82) mittels des Ankoppelelements (8a, 8b, 25, 39, 40, 53, 67, 81) oder mindestens eines der Ankoppelelemente (8a, 8b, 25, 39, 40, 53, 67, 81) induktiv erwärmt wird.

3. Verfahren nach Anspruch 2, **dadurch gekennzeichnet, dass** der Wärmeüberträger zumindest auch außerhalb eines den mindestens einen Mediumbehälter (5, 23, 43, 51, 78, 82) umfassenden, wärmeisolierten Speichergehäuses (3, 22, 36) mittels des Ankoppelelements (8a, 8b, 25, 39, 40, 53, 67, 81) oder mindestens eines der Ankoppelelemente (8a, 8b, 25, 39, 40, 53, 67, 81) induktiv erwärmt wird.

4. Vorrichtung zur Energiespeicherung, umfassend
mindestens ein Ankoppelelement (8a, 8b, 25, 39, 40, 53, 67, 81),
Mittel (9, 10, 11, 31, 41, 54, 73, 74, 89, 90, 93) zur induktiven Erwärmung des Ankoppelelements oder mindestens eines der Ankoppelelemente (8a, 8b, 25, 39, 40, 53, 67, 81),
ein Wärmespeichermedium (4, 27, 75) aus Feststoff und
mindestens einen Kreislauf eines fluiden Wärmeüberträgers,
**dadurch gekennzeichnet, dass**
der Kreislauf des Wärmeüberträgers derart gestaltet ist, dass zur Wärmeeinspeisung in das Wärmespeichermedium und/oder zur Wärmeentnahme aus dem Wärmespeichermedium (4, 27, 75) der Wärmeüberträger das Wärmespeichermedium (4, 27, 75) dieses unmittelbar kontaktierend umströmt und/oder durchströmt.

5. Vorrichtung nach Anspruch 4, **dadurch gekennzeichnet, dass** der Wärmeüberträger derart geführt ist, dass der Wärmeüberträger zur Wärmeaufnahme durch das Ankoppelelement (8a, 8b, 25, 39, 40, 53, 67, 81) oder mindestens eines der Ankoppelelemente (8a, 8b, 25, 39, 40, 53, 67, 81) hindurch oder an dem Ankoppelelement (8a, 8b, 25, 39, 40, 53, 67, 81) oder mindestens einem der Ankoppelelemente (8a, 8b, 25, 39, 40, 53, 67, 81) entlang strömt.

6. Vorrichtung nach Anspruch 4 oder 5, **gekennzeichnet durch** ein wärmeisoliertes Speichergehäuse, wobei das Ankoppelelement (8a, 8b, 25, 39, 40, 53, 67, 81) oder mindestens eines der Ankoppelelemente (8a, 8b, 25, 39, 40, 53, 67, 81) innerhalb des wärmeisolierten Speichergehäuses (3, 22, 36) angeordnet ist.

7. Vorrichtung nach Anspruch 6, **gekennzeichnet durch** mindestens einen Mediumbehälter (5, 23, 43, 51, 78, 82) und einen gegenüber dem mindestens einen Mediumbehälter (5, 23, 43, 51, 78, 82) wärmeisolierten Heizbereich, wobei das Ankoppelelement (8a, 8b, 25, 39, 40, 53, 67, 81) oder mindestens eines der Ankoppelelemente (8a, 8b, 25, 39, 40, 53, 67, 81) innerhalb des wärmeisolierten Heizbereichs (24, 37, 66) angeordnet ist.

8. Vorrichtung nach einem der Ansprüche 4 bis 7, **dadurch gekennzeichnet, dass** das Ankoppelelement (8a, 8b, 25, 39, 40, 53, 67, 81) oder mindestens eines der Ankoppelelemente (8a, 8b, 25, 39, 40, 53, 67, 81) eine in sich geschlossene Strecke bildet, bevorzugt ringförmig ist.

9. Vorrichtung nach Anspruch 4 oder 5, **gekennzeichnet durch** ein wärmeisoliertes Speichergehäuse, wobei das Ankoppelelement (8a, 8b, 25, 39, 40, 53, 67, 81) oder mindestens eines der Ankoppelelemente (8a, 8b, 25, 39, 40, 53, 67, 81) außerhalb des wärmeisolierten Speichergehäuses (3, 22, 36) angeordnet ist und das Ankoppelelement (8a, 8b, 25, 39, 40, 53, 67, 81) oder mindestens eines der Ankoppelelemente (8a, 8b, 25, 39, 40, 53, 67, 81) ein als Sekundärwicklung um einen magnetischen Kern (11) eines zur Vorrichtung gehörendes transformatorartigen Aufbaus (9) geführtes Fluidführungselement (8a, 8b, 53) ist.

10. Vorrichtung nach Anspruch 9, **dadurch gekennzeichnet, dass** zur Bildung der Sekundärwicklung das mindestens eine Fluidführungselement (8) in Flussrichtung vor dem transformatorartigen Aufbau (9) jeweils in mindestens zwei Fluidführungsteilelemente (8a, 8b) aufgeteilt ist und die mindestens zwei Fluidführungsteilelemente (8a, 8b) in Flussrichtung hinter dem transformatorartigen Aufbau jeweils wieder zu einem einzigen Fluidführungselement (8) vereinigt sind.

11. Vorrichtung nach einem Ansprüche 4 bis 10, **dadurch gekennzeichnet, dass** mindestens ein Kreislauf des fluiden Wärmeüberträgers zusätzlich zu mindestens einer Wärmeabgabeeinheit (17, 48, 87) mindestens eine die Wärmeabgabeeinheit (17, 48, 87) überbrückende Bypassleitung (86) aufweist.

## Claims

1. Method for energy storage, in which
at least one coupling element (8a, 8b, 25, 39, 40, 53, 67, 81) is heated by means of electromagnetic induction and heat is transferred from the at least one coupling element (8a, 8b, 25, 39, 40, 53, 67, 81) to a heat storage medium (4, 27, 75) made of solid matter and
a fluid heat carrier is used
**characterised in that**
a) for feeding heat into the heat storage medium (4, 27, 75), the fluid heat carrier is heated by the coupling element (8a, 8b, 25, 39, 40, 53, 67, 81) and flows around and/or through the heat storage medium (4, 27, 75) and/or
b) for extracting heat, the fluid heat carrier flows around and/or through the heat storage medium (4, 27, 75) in direct contact.

2. Method according to claim 1, **characterised in that** the heat carrier is heated by means of induction at least also outside of at least one medium container (5, 23, 43, 51, 78, 82) containing at least a part of the heat storage medium (4, 27, 75) by the coupling element (8a, 8b, 25, 39, 40, 53, 67, 81) or at least one of the coupling elements (8a, 8b, 25, 39, 40, 53, 67, 81).

3. Method according to claim 2, **characterised in that** the heat carrier is heated by means of induction at least also outside of a heat insulated storage housing (3, 22, 36) containing the at least one medium container (5, 23, 43, 51, 78, 82) by the coupling element (8a, 8b, 25, 39, 40, 53, 67, 81) or at least one of the coupling elements (8a, 8b, 25, 39, 40, 53, 67, 81).

4. Device for energy storage, comprising
at least one coupling element (8a, 8b, 25, 39, 40, 53, 67, 81),
means (9, 10, 11, 31, 41, 54, 73, 74, 89, 90, 93) for induction heating of the coupling element or at least one of the coupling elements (8a, 8b, 25, 39, 40, 53, 67, 81),
a heat storage medium (4, 27, 75) made of solid matter, and
at least one circuit of a fluid heat carrier,
**characterised in that**
the circuit of the heat carrier being such that for feeding heat into the heat storage medium and/or for extracting heat from the heat storage medium (4, 27, 75) the heat carrier flows around and/or through the heat storage medium (4, 27, 75) in direct contact.

5. Device according to claim 4, **characterised in that** the heat carrier is guided in such a way that the heat carrier flows through the coupling element (8a, 8b, 25, 39, 40, 53, 67, 81) or at least one of the coupling elements (8a, 8b, 25, 39, 40, 53, 67, 81) or alongside the coupling element (8a, 8b, 25, 39, 40, 53, 67, 81) or at least one of the coupling elements (8a, 8b, 25, 39, 40, 53, 67, 81) for heat absorption.

6. Device according to claim 4 or 5, **characterised by** a heat insulated storage housing, the coupling element (8a, 8b, 25, 39, 40, 53, 67, 81) or at least one of the coupling elements (8a, 8b, 25, 39, 40, 53, 67, 81) being disposed within the heat insulated storage housing (3, 22, 36).

7. Device according to claim 6, **characterised by** at least one medium container (5, 23, 43, 51, 78, 82) and a heating area thermally insulated against the at least one medium container (5, 23, 43, 51, 78, 82), the coupling element (8a, 8b, 25, 39, 40, 53, 67, 81) or at least one of the coupling elements (8a, 8b, 25, 39, 40, 53, 67, 81) being disposed within the thermally insulated heating area (24, 37, 66).

8. Device according to any of claims 4 to 7, **characterised in that** the coupling element (8a, 8b, 25, 39, 40, 53, 67, 81) or at least one of the coupling elements (8a, 8b, 25, 39, 40, 53, 67, 81) forms a closed path, preferably being circular.

9. Device according to claim 4 or 5, **characterised by** a heat insulated storage housing, the coupling element (8a, 8b, 25, 39, 40, 53, 67, 81) or at least one of the coupling elements (8a, 8b, 25, 39, 40, 53, 67, 81) being disposed outside of the heat insulated storage housing (3, 22, 36) and the coupling element (8a, 8b, 25, 39, 40, 53, 67, 81) or at least one of the coupling elements (8a, 8b, 25, 39, 40, 53, 67, 81) being a fluid guidance element (8a, 8b, 53) guided as secondary winding around a magnetic core (11) of a transformer-type structure (9) belonging to the device.

10. Device according to claim 9, **characterised in that** the at least one fluid guidance element (8) is divided into at least two fluid guidance sub-elements (8a, 8b) upstream of the transformer-type structure (9) and the at least two fluid guidance sub-elements (8a, 8b) combine downstream of the transformer-type structure to rebuild one fluid guidance element (8) for forming a secondary winding.

11. Device according to any of claims 4 to 10, **characterised in that** at least one circuit of the fluid heat carrier comprises in addition to at least one heat output unit (17, 48, 87) at least one bypass line (86) bypassing the heat output unit (17, 48, 87).

## Revendications

1. Procédé de stockage d'énergie selon lequel
au moins un élément de couplage (8a, 8b, 25, 39, 40, 53, 67, 81) est chauffé par induction électromagnétique et chaleur est transférée d'au moins un élément de couplage (8a, 8b, 25, 39, 40, 53, 67, 81) à un médium de stockage de chaleur (4, 27, 75) en matière solide et
un caloporteur fluide est utilisé
**caractérisé en ce que**
a) pour alimenter la chaleur en le médium de stockage de chaleur le caloporteur fluide (4, 27, 75) est chauffé par l'élément de couplage (8a, 8b, 25, 39, 40, 53, 67, 81) et circule autour du et/ou par le médium de stockage de chaleur (4, 27, 75) et/ou
b) pour extraire de la chaleur le caloporteur fluide circule autour du et/ou par le médium de stockage de chaleur (4, 27, 75) en le contacter directement.

2. Procédé selon revendication 1, **caractérisé en ce que** le caloporteur est chauffé par induction au moins aussi à l'extérieur d'au moins un récipient de médium (5, 23, 43, 51, 78, 82) contenant au moins une partie du médium de stockage de chaleur (4, 27, 75) par l'intermédiaire de l'élément de couplage (8a, 8b, 25, 39, 40, 53, 67, 81) ou d'au moins un des éléments de couplage (8a, 8b, 25, 39, 40, 53, 67, 81).

3. Procédé selon revendication 2, **caractérisé en ce que** le caloporteur est chauffé par induction au moins aussi à l'extérieur d'un boîtier de stockage calorifugé (3, 22, 36) contenant l'au moins un récipient de médium (5, 23, 43, 51, 78, 82) par l'intermédiaire de l'élément de couplage (8a, 8b, 25, 39, 40, 53, 67, 81) ou d'au moins un des éléments de couplage (8a, 8b, 25, 39, 40, 53, 67, 81).

4. Dispositif de stockage d'énergie comprenant
au moins un élément de couplage (8a, 8b, 25, 39, 40, 53, 67, 81),
moyens (9, 10, 11, 31, 41, 54, 73, 74, 89, 90, 93) pour le chauffage inductif de l'élément de couplage ou d'au moins un des éléments de couplage (8a, 8b, 25, 39, 40, 53, 67, 81),
un médium de stockage de chaleur (4, 27, 75) en matière solide et
au moins un circuit du caloporteur fluide,
**caractérisé en ce que**
le circuit du caloporteur est de telle façon que le caloporteur circule autour du et/ou par le médium de stockage de chaleur (4, 27, 75) en le contacter directement pour alimenter la chaleur en le médium de stockage et/ou extraire de la chaleur du médium de stockage de chaleur (4, 27, 75).

5. Dispositif selon revendication 4, **caractérisé en ce que** le guidage du caloporteur est de telle façon que le caloporteur circule par l'élément de couplage (8a, 8b, 25, 39, 40, 53, 67, 81) ou au moins un des éléments de couplage (8a, 8b, 25, 39, 40, 53, 67, 81) ou autour de l'élément de couplage (8a, 8b, 25, 39, 40, 53, 67, 81) ou au moins un des éléments de couplage (8a, 8b, 25, 39, 40, 53, 67, 81) pour absorber de chaleur.

6. Dispositif selon revendication 4 ou 5, **caractérisé par** un boîtier de stockage calorifugé, l'élément de couplage (8a, 8b, 25, 39, 40, 53, 67, 81) ou au moins un des éléments de couplage (8a, 8b, 25, 39, 40, 53, 67, 81) étant disposé dans le boîtier de stockage calorifugé (3, 22, 36).

7. Dispositif selon revendication 6, **caractérisé par** au moins un médium de stockage (5, 23, 43, 51, 78, 82) et une zone de chauffage thermiquement isolée par rapport à l'au moins un médium de stockage (5, 23, 43, 51, 78, 82), l'élément de couplage (8a, 8b, 25, 39, 40, 53, 67, 81) ou au moins un des éléments de couplage (8a, 8b, 25, 39, 40, 53, 67, 81) étant disposé dans la zone de chauffage thermiquement isolée (24, 37, 66).

8. Dispositif selon une des revendications 4 à 7, **caractérisé en ce que** l'élément de couplage (8a, 8b, 25, 39, 40, 53, 67, 81) ou au moins un des éléments de couplage (8a, 8b, 25, 39, 40, 53, 67, 81) forme un trajet fermé, de préférence circulaire.

9. Dispositif selon revendication 4 ou 5, **caractérisé par** un boîtier de stockage calorifugé, l'élément de couplage (8a, 8b, 25, 39, 40, 53, 67, 81) ou au moins un des éléments de couplage (8a, 8b, 25, 39, 40, 53, 67, 81) étant disposé à l'extérieure du boîtier de stockage calorifugé (3, 22, 36) et l'élément de couplage (8a, 8b, 25, 39, 40, 53, 67, 81) ou au moins un des éléments de couplage (8a, 8b, 25, 39, 40, 53, 67, 81) étant un élément de guidage de fluide (8a, 8b, 53) guidé comme enroulement secondaire autour d'un noyau magnétique(11) d'une structure de type transformateur (9) faisant partie du dispositif.

10. Dispositif selon revendication 9, **caractérisé en ce que** l'au moins un élément de guidage de fluide (8) est divisé en au moins deux sous-éléments de guidage de fluide (8a, 8b) en amont de la structure de type transformateur (9) et les au moins deux sous-éléments de guidage de fluide (8a, 8b) se réunissent pour former un seul élément de guidage de fluide (8) en aval de la structure de type transformateur pour former l'enroulement secondaire.

11. Dispositif selon une des revendications 4 à 10, **caractérisé en ce qu'**au moins un circuit du caloporteur fluide comporte, en addition à au moins une unité d'émission de chaleur (17, 48, 87), au moins une ligne de dérivation (86) pontant l'unité d'émission de chaleur (17, 48, 87).
